(19) Europäisches Patentamt / European Patent Office / Office européen des brevets

(11) **EP 4 279 210 A1**

(12) **EUROPEAN PATENT APPLICATION**
published in accordance with Art. 153(4) EPC

(43) Date of publication:
**22.11.2023 Bulletin 2023/47**

(21) Application number: **21919557.5**

(22) Date of filing: **18.11.2021**

(51) International Patent Classification (IPC):
**B23K 26/21** (2014.01)    **B23K 26/34** (2014.01)
**B33Y 10/00** (2015.01)    **B33Y 30/00** (2015.01)

(52) Cooperative Patent Classification (CPC):
**B23K 26/21; B23K 26/34; B33Y 10/00; B33Y 30/00**

(86) International application number:
**PCT/JP2021/042411**

(87) International publication number:
**WO 2022/153666 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.01.2021  JP 2021004335**

(71) Applicant: **EBARA CORPORATION**
Ota-ku,
Tokyo 144-8510 (JP)

(72) Inventor: **SHINOZAKI, Hiroyuki**
Tokyo 144-8510 (JP)

(74) Representative: **Pritzlaff, Stefanie Lydia**
**Wagner & Geyer Partnerschaft mbB**
**Patent- und Rechtsanwälte**
**Gewürzmühlstraße 5**
**80538 München (DE)**

(54) **DED NOZZLE USED IN AM DEVICE, AND ADAPTER THAT CAN BE ATTACHED TO AND DETACHED FROM DED NOZZLE**

(57)    The present disclosure provides a technique for carrying out fabrication on a powder material bedded in advance using a DED nozzle.

According to one aspect, a DED nozzle for use with an AM apparatus is provided. This DED nozzle includes a DED nozzle main body, a laser port provided at a distal end of the DED nozzle main body and configured to emit laser light, a laser passage provided in communication with the laser port and configured to allow the laser light to pass through inside the DED nozzle main body, a powder port provided at the distal end of the DED nozzle main body and configured to eject a powder material, and a powder passage provided in communication with the powder port and configured to allow the powder material to pass through inside the DED nozzle main body. Directions of the powder passage and the powder port are determined based on a distance from the powder port to a fabrication point, a velocity of the powder material ejected from the powder port, and a gravitational acceleration.

Fig. 2

## Description

TECHNICAL FIELD

The present application relates to a DED nozzle for use with an AM apparatus and an adapter detachably attachable to a DED nozzle. The present application claims priority under the Paris Convention to Japanese Patent Application No. 2021-4335 filed on January 14, 2021. The entire disclosure of Japanese Patent Application No. 2021-4335 including the specification, the claims, the drawings, and the abstract is incorporated herein by reference in its entirety.

BACKGROUND ART

There are known techniques for directly fabricating a three-dimensional object based on three-dimensional data on a computer that expresses the three-dimensional object. Known examples thereof include the Additive Manufacturing (AM) technique. As one example thereof, Direct Energy Deposition (DED) is available as the AM technique employing the deposition method. DED is a technique that carries out fabrication by melting and solidifying a metal material together with a base material using an appropriate heat source while supplying the metal material locally. Further, Powder Bed Fusion (PBF) is available as one example of the AM technique. In PBF, each layer of the three-dimensional object is fabricated by subjecting two-dimensionally bedded metal powder to irradiation of a fabrication target portion thereof with a laser beam or an electron beam serving as a heat source, and melting and solidifying or sintering the metal powder. In PBF, the desired three-dimensional object can be fabricated by repeating such a process.

CITATION LIST

PATENT LITERATURE

PTL 1: Japanese Patent Application Laid-Open No. 2011-88154
PTL 2: United States Patent No. 4724299
PTL 3: International Publication No. 93/013871
PTL 4: Japanese Patent Application Laid-Open No. 2005-219060
PTL 5: Japanese Unexamined Patent Application Publication (Translation of PCT Application) No. 2019-500246

SUMMARY OF INVENTION

TECHNICAL PROBLEM

Each layer of the three-dimensional object can also be fabricated by emitting a laser beam toward metal powder or onto metal powder using the DED nozzle after two-dimensionally bedding the metal powder like PBF. However, in such a case, generally, the DED nozzle carries out the fabrication while supplying a powder material used as the material and carrier gas from the DED nozzle, thereby unintentionally blowing off the metal powder bedded in advance due to the supply of the carrier gas and thus undesirably making the planned fabrication difficult. One of objects of the present application is to provide a technique for carrying out fabrication on a powder material bedded in advance using a DED nozzle.

SOLUTION TO PROBLEM

According to one aspect, a DED nozzle for use with an AM apparatus is provided. This DED nozzle includes a DED nozzle main body, a laser port provided at a distal end of the DED nozzle main body and configured to emit laser light, a laser passage provided in communication with the laser port and configured to allow the laser light to pass through inside the DED nozzle main body, a powder port provided at the distal end of the DED nozzle main body and configured to eject a powder material, and a powder passage provided in communication with the powder port and configured to allow the powder material to pass through inside the DED nozzle main body. Directions of the powder passage and the powder port are determined based on a distance from the powder port to a fabrication point, a velocity of the powder material ejected from the powder port, and a gravitational acceleration.

BRIEF DESCRIPTION OF DRAWINGS

Fig. 1 schematically illustrates an AM apparatus for manufacturing a fabrication object according to one embodiment.
Fig. 2 schematically illustrates a cross-section of a DED nozzle according to one embodiment.
Fig. 3 schematically illustrates a cross-section of a conventional DED nozzle as a reference example.
Fig. 4 illustrates a trajectory of a powder particle ejected from the DED nozzle.
Fig. 5 is a schematic diagram illustrating a trajectory of the powder particle when the powder particle is ejected from the DED nozzle under predetermined conditions according to one embodiment.
Fig. 6 is a schematic diagram illustrating a trajectory of the powder particle when the powder particle is ejected from the DED nozzle under predetermined conditions according to one embodiment.
Fig. 7 is a schematic diagram illustrating a trajectory of the powder particle when the powder particle is ejected from the DED nozzle under predetermined conditions according to one embodiment.
Fig. 8 is a schematic diagram illustrating a trajectory of the powder particle when the powder particle is ejected from the DED nozzle under predetermined conditions according to one embodiment.

Fig. 9 is a schematic diagram illustrating a trajectory of the powder particle when the powder particle is ejected from the DED nozzle under predetermined conditions according to one embodiment.

Fig. 10 schematically illustrates a cross-section of the DED nozzle with an adapter attached thereto according to one embodiment.

DESCRIPTION OF EMBODIMENTS

In the following description, embodiments of an AM apparatus for manufacturing a fabrication object, a DED nozzle for use with the AM apparatus, and an adapter detachably attachable to the DED nozzle according to the present invention will be described with reference to the accompanying drawings. In the accompanying drawings, the same or similar components will be indicated by the same or similar reference numerals, and redundant descriptions regarding the same or similar components may be omitted in the description of each of the embodiments. Further, features described in each of the embodiments are also applicable to other embodiments in so far as they do not contradict each other.

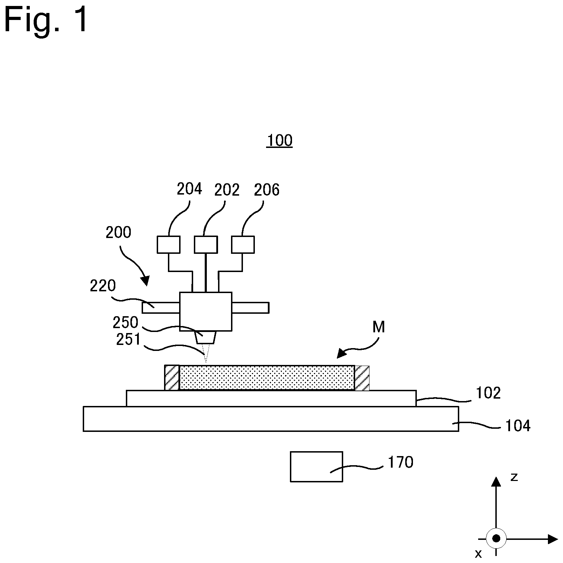

Fig. 1 schematically illustrates an AM apparatus for manufacturing a fabrication object according to one embodiment. As illustrated in Fig. 1, an AM apparatus 100 includes a base plate 102. A fabrication object M is going to be fabricated on the base plate 102. The base plate 102 can be a plate made from an arbitrary material capable of supporting the fabrication object M. In one embodiment, the base plate 102 is disposed on an XY stage 104. The XY stage 104 is a stage 104 movable in two directions (an x direction and a y direction) perpendicular to each other in a horizontal plane. The XY stage 104 may be coupled with a lift mechanism movable in a height direction (a z direction). Further, in one embodiment, the XY stage 104 may be omitted.

In one embodiment, the AM apparatus 100 includes a DED head 200 as illustrated in Fig. 1. The DED head 200 is connected to a laser source 202, a powder material source 204, and a gas source 206. The DED head 200 includes a DED nozzle 250. The DED nozzle 250 is configured to inject a laser, a powder material, and gas fed from the laser source 202, the powder material source 204, and the gas source 206, respectively.

The DED head 200 can be an arbitrary DED head, and, for example, a known DED head can be used as it. The DED head 200 is coupled with a movement mechanism 220, and is movably configured. The movement mechanism 220 can be an arbitrary movement mechanism, and, for example, may be a movement mechanism capable of moving the DED head 200 along a specific axis such as a rail or may be constituted by a robot capable of moving the DED head 200 to an arbitrary position and in an arbitrary direction. As one embodiment, the movement mechanism 220 can be configured to be able to move the DED head 200 along perpendicular three axes.

The AM apparatus 100 according to one embodiment includes a control device 170 as illustrated in Fig. 1. The control device 170 is configured to control the operations of various kinds of operation mechanisms of the AM apparatus 100, such as the above-described DED head 200 and the various types of operation mechanisms 220. The control device 170 can be constituted by a general computer or a dedicated computer.

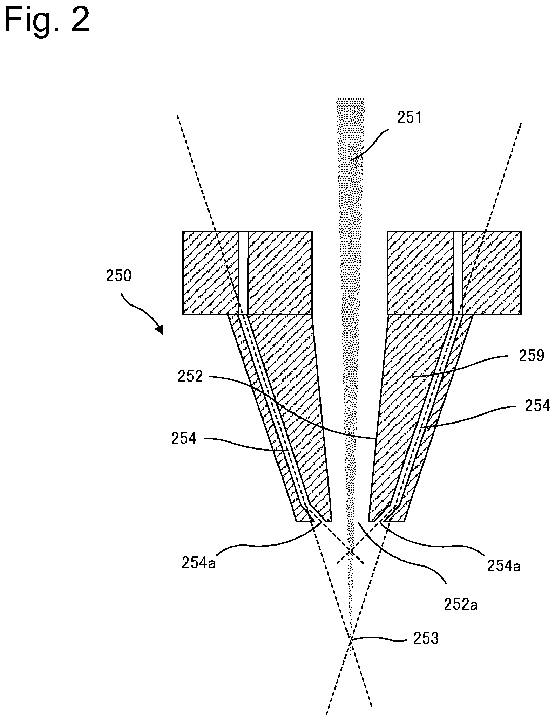

Fig. 2 schematically illustrates a cross-section of the DED nozzle 250 according to one embodiment. The DED nozzle 250 according to the illustrated embodiment includes a DED nozzle main body 259 having a generally truncated conical shape. The DED nozzle 250 according to the illustrated embodiment includes a first passage 252 at the center of the DED nozzle main body 259. A laser 251 guided from the laser source 202 passes through the first passage 252. After passing through the first passage 252, the laser 251 is emitted from a laser port 252a of the DED nozzle main body 259. In one embodiment, the first passage 252 is a passage circular in cross-section, and is formed in such a manner that the radius of the circle in cross-section is reducing toward the laser port 252a as illustrated. Further, as one embodiment, the first passage 252 may be such a passage that the radius of the circle in cross-section is kept constant.

Further, the DED nozzle main body 259 includes a second passage 254 outside the first passage 252. The powder material supplied from the powder material source 204 and the carrier gas supplied from the gas source 206 and used to transport the powder material pass through the second passage 254. After passing through the second passage 254, the powder material is ejected from a powder port 254a. In one embodiment, the second passage 254 can be a passage having a cross-section shaped like a single ring surrounding the first passage 252. Alternatively, in one embodiment, the second passage 254 can be a plurality of passages having a circular cross-section arranged so as to surround the first passage 252. In one embodiment, the second passage 254 may have a triangular shape or a quadrilateral shape in cross-section. For example, a small passage can be easily manufactured by employing such a structure that the DED nozzle main body 259 can be divided into an inner body and an outer body with a border therebetween placed along the second passage 254 and machining a groove serving as the second passage 254 on a surface where the inner body and the outer body are in contact with each other.

The carrier gas can be inertial gas, such as argon gas or nitrogen gas. Argon gas heavier than air is further desirably used as the carrier gas. Using the inertial gas heavier than air as the carrier gas allows a molten pool formed from the melted powder material at and near a fabrication point 253 to be covered with the inertial gas, thereby contributing to preventing the molten pool and the fabrication object from being oxidized.

In another embodiment, further, the DED nozzle main body 259 may include a third passage and a gas port outside the second passage 254. Shield gas passes through the third passage. The shield gas is discharged from the gas port after passing through the third passage. In the case where the DED nozzle 250 includes the third passage, the third passage may be a passage having a cross-section shaped like a single ring surrounding the first passage 252 and the second passage 254, or may be a plurality of passages having a circular cross-section arranged so as to surround the first passage 252 and the second passage 254.

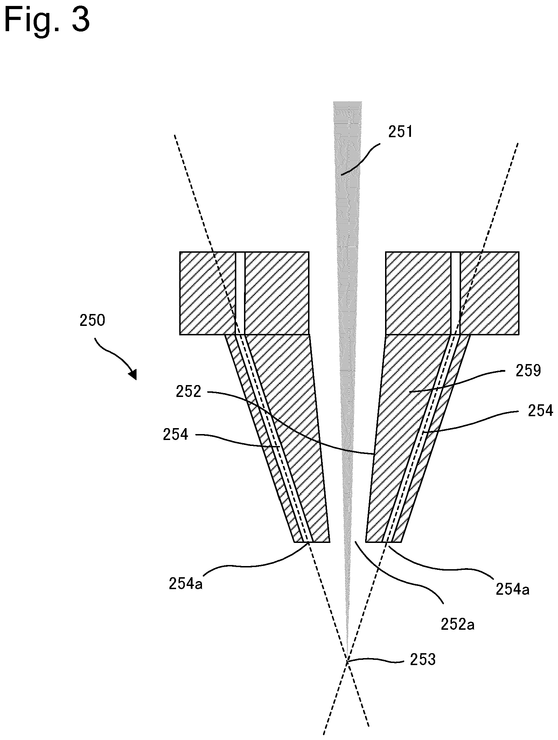

Generally, the DED nozzle 250 is designed in such a manner that the laser 251 emitted from the laser port 252a and the powder material ejected from the powder port 254a are converged at the fabrication point 253. Fig. 3 schematically illustrates a cross-section of a conventional DED nozzle 250 as a reference example. The conventional DED nozzle 250 illustrated in Fig. 3 is designed in such a manner that respective extensions of the first passage 252 through which the laser 251 passes, and the second passage 254 intersect with each other at the fabrication point 253. Some of conventional DED nozzles are configured to be able to carry out fabrication while being pointed to an arbitrarily oriented metal surface or the like at an arbitrary angle. Therefore, the powder material passes through the second passage 254 together with high-pressure carrier gas, and is supplied from the powder port 254a at a high velocity. However, when the fabrication proceeds on a surface with a powder material bedded over it using such a conventional DED nozzle 250, the high-pressure and high-velocity gas supplied from the DED nozzle 250 unintentionally blows off the material powder bedded near the fabrication point 253, thereby making the intended fabrication impossible. One possible measure against it is to supply the powder material at a low velocity by reducing the pressure of the carrier gas supplied from the DED nozzle 250 so as not to blow off the bedded material powder, but there is raised such a problem that the powder material cannot be appropriately supplied to the fabrication point 253 in this case.

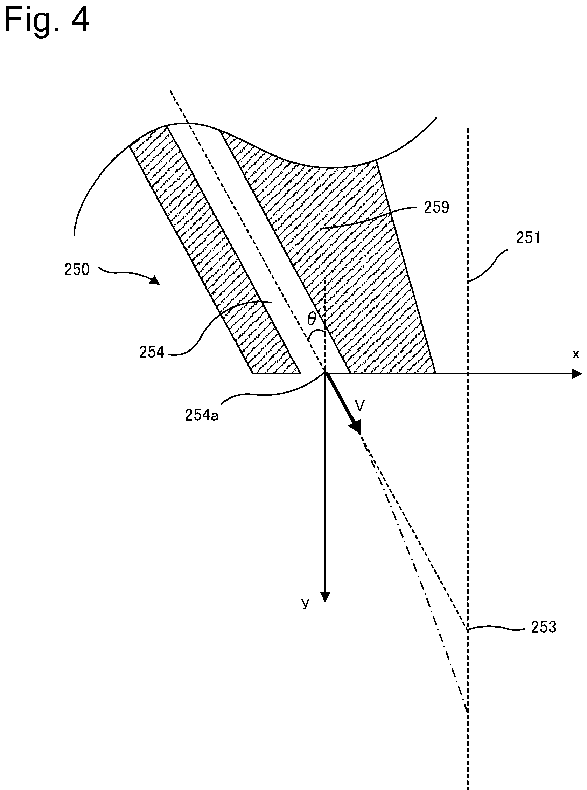

Fig. 4 illustrates a trajectory of a powder particle ejected from the DED nozzle 250. Assume that the distance from the powder port 254a of the DED nozzle 250 to the fabrication point 253 is

a vertical distance: y [m]
a horizontal distance: x [m],
a gravitational acceleration: g [m/s$^2$],
an angle at which the powder material is ejected from the DED nozzle 250: θ [deg], and a velocity at which the powder material is ejected from the DED nozzle 250: V [m/s].

After time t [s] since some powder particle is ejected from the powder material 254a, the position of the powder particle can be expressed by the following equations.

$$x = X(t) = Vt \times \sin(\theta)$$

$$y = Y(t) = -\{(g/2)t^2 + Vt\cos(\theta)\}$$

In this case, t = 0 is the time point at which the powder particle is ejected from the powder port 254a of the DED nozzle 250. The velocity V at which the powder material is ejected from the DED nozzle 250 is assumed to be equal to the velocity at which the carrier gas is ejected from the powder port 254a. Further, the angle θ at which the powder material is ejected is an angle with respect to the vertical direction.

For example, when the powder material is ejected from the DED nozzle 250 at a sufficiently high velocity V [m/s], this leads to Vtcos(θ) >> (g/2)t$^2$, and therefore the powder material is little gravitationally affected and the powder particle takes a trajectory substantially expressed by the following equations.

$$x = X(t) = Vt \times \sin(\theta)$$

$$y = Y(t) = -Vt\cos(\theta)$$

More specifically, the DED nozzle 250 is designed in such a manner that the respective extensions of the first passage 252, through which the laser 251 passes, and the second passage 254, through which the powder material passes, intersect at the fabrication point 253, as indicated by a broken line in Fig. 4.

However, when the powder material is ejected from the DED nozzle 250 at a low velocity V [m/s], the powder material is gravitationally affected and the powder particle takes a trajectory expressed by the following equations.

$$x = X(t) = Vt \times \sin(\theta)$$

$$y = Y(t) = -\{(g/2)t^2 + Vt\cos(\theta)\}$$

More specifically, the trajectory of the powder particle is drawn as indicated by a long dashed short dashed line in Fig. 4. For this reason, when the powder material is ejected from the DED nozzle 250 at a low velocity V [m/s], the powder particle ends up in a failure to be supplied to the intended fabrication point 253, being supplied to a position below the fabrication point 253.

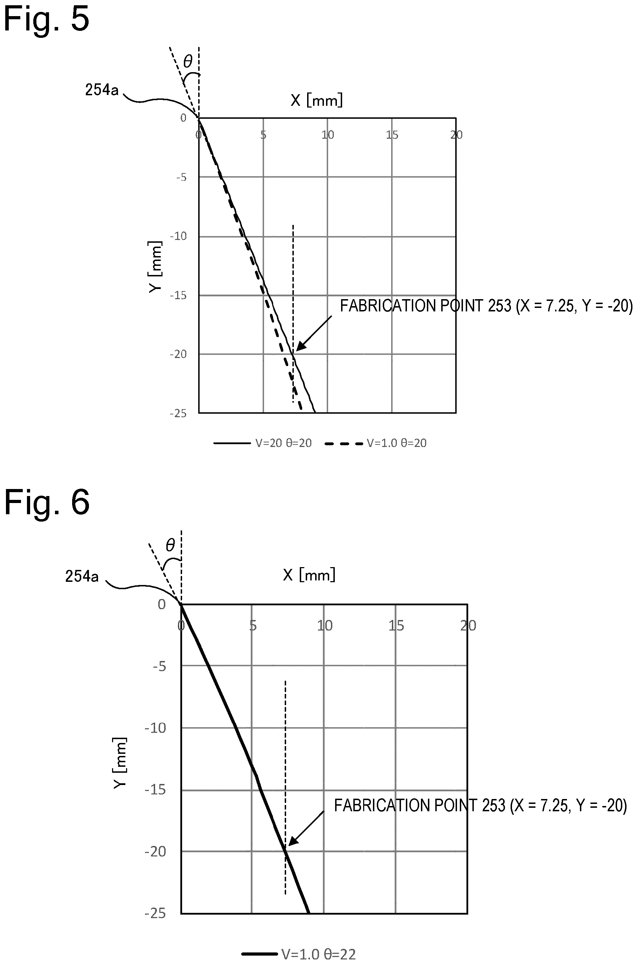

As one example, Fig. 5 illustrates a trajectory of the powder particle in a case where the conventional DED nozzle has the fabrication point 253 designed in such a manner that the distance thereof from the powder port 254a of the nozzle 250 is

the vertical distance: -20 mm and
the horizontal distance: 7.25 mm,
and the powder material is ejected under conditions of
the velocity of the particle: V = 20 [m/s],
the ejection angle of the particle: $\theta$ = 20 [deg], and
the gravitational acceleration: g = 9.8 [m/s$^2$].

Further, Fig. 5 illustrates a trajectory of the powder particle when the velocity of the particle is changed to the velocity of the particle: V = 1.0 [m/s] under the same conditions.

As illustrated in Fig. 5, in the case of the conventional DED nozzle that supplies the carrier gas and the powder material at a relatively high pressure and high velocity, such as the velocity of the particle set to V = 20 [m/s], the powder material can be supplied to the emitted laser 251 at the fabrication point 253 and appropriate fabrication can be achieved by placing a geometrical intersection point between the ejection direction of the powder material and the emission direction of the laser at the fabrication point 253. This is because, due to the ejection of the powder particle at a relatively high velocity, the powder particle is less affected by the weight before the arrival at the fabrication point 253.

On the other hand, as illustrated in Fig. 5, if the carrier gas and the powder material are ejected from the powder port 254a at a relatively low velocity such as V = 1.0 [m/s] using the conventional DED nozzle designed assuming that the velocity of the particle is set to V = 20 [m/s], the powder particle fails to pass through the intended fabrication point 253. This is because, due to the ejection of the powder particle at a low velocity, the powder particle is affected by the weight by the time of the arrival at the fabrication point 253. For this reason, in the DED nozzle that supplies the carrier gas and the powder material at a relatively low velocity, the geometrical intersection point between the ejection direction of the powder particle and the emission direction of the laser cannot be simply placed at the fabrication point 253.

In light thereof, in the present disclosure, in the DED nozzle 250 that supplies the carrier gas and the powder material at a relatively low velocity, the angle at which the powder material is ejected from the DED nozzle is designed in consideration of the gravitational influence so as to allow the powder material to be appropriately supplied to the fabrication point 253. More specifically, the angle $\theta$ [deg] at which the powder material is ejected from the DED nozzle 250, i.e., the directions of the powder port 254a and the second passage 254 are determined so as to allow the powder particle to pass through the fabrication point 253 based on the above-described equations according to the position of the fabrication point 253 and the ejection velocity V of the powder particle.

In the DED nozzle 250 according to the embodiment illustrated in Fig. 2, the second passage 254, through which the powder material and the carrier pass, changes the direction of the passage at a position slightly before the powder port 254a. In the DED nozzle 250 according to the embodiment illustrated in Fig. 2, the second passage 254 is designed in such a manner that an extension of the second passage 254 (the powder passage) slightly before the powder port 254a intersects with the laser above the fabrication point 253.

As one example, in a case where the DED nozzle 250 has the fabrication point 253 located at the following distance from the powder port 254a of the DED nozzle 250,

the vertical distance: -20 mm and
the horizontal distance: 7.25 mm,
and has the velocity at which the powder material is ejected from the DED nozzle 250: V = 1.0 [m/s], ejection at $\theta$ = 22 [deg] allows the laser and the powder particle to intersect at the fabrication point 253. Fig. 6 is a graph indicating a trajectory of the powder particle under these conditions.

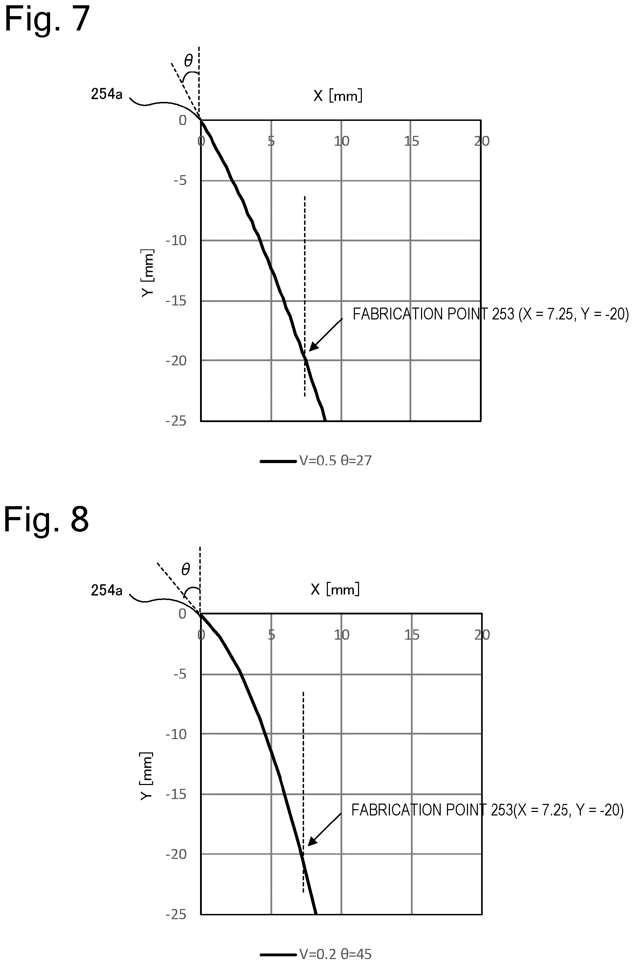

As one example, in a case where the DED nozzle 250 has the fabrication point 253 located at the following distance from the powder port 254a of the DED nozzle 250,

the vertical distance: -20 mm and
the horizontal distance: 7.25 mm,
and has the velocity at which the powder material is ejected from the DED nozzle 250: V = 0.5 [m/s], ejection at $\theta$ = 27 [deg] allows the laser and the powder particle to intersect at the fabrication point 253. Fig. 7 is a graph indicating a trajectory of the powder particle under these conditions.

As one example, in a case where the DED nozzle 250 has the fabrication point 253 located at the following distance from the powder port 254a of the DED nozzle 250,

the vertical distance: -20 mm and
the horizontal distance: 7.25 mm,
and has the velocity at which the powder material is ejected from the DED nozzle 250: V = 0.2 [m/s], ejection at $\theta$ = 45 [deg] allows the laser and the powder particle to intersect at the fabrication point 253. Fig. 8 is a graph indicating a trajectory of the powder particle under these conditions.

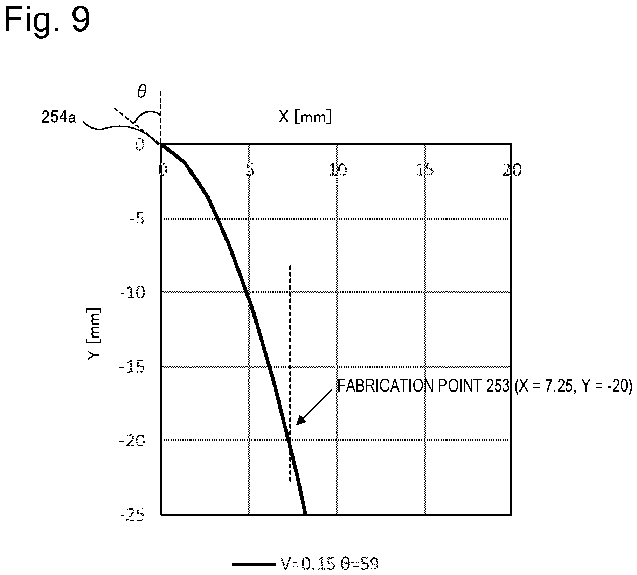

As one example, in a case where the DED nozzle 250 has the fabrication point 253 located at the following distance from the powder port 254a of the DED nozzle 250,

the vertical distance: -20 mm and
the horizontal distance: 7.25 mm,

and has the velocity at which the powder material is ejected from the DED nozzle 250: V = 0.15 [m/s], ejection θ = 59 [deg] allows the laser and the powder particle to intersect at the fabrication point 253. Fig. 9 is a graph indicating a trajectory of the powder particle under these conditions.

In this manner, the powder material can be appropriately supplied to the fabrication point 253 by designing the angle θ at which the powder material is ejected from the DED nozzle 250 according to the fabrication point 253 and the velocity V at which the powder material is ejected from the DED nozzle 250. More specifically, the powder material can be ejected from the DED nozzle 250 at the above-described angle θ [deg] by configuring the DED nozzle 250 in such a manner that the direction of the second passage 254 immediately before the powder port 254a matches the above-described θ [deg] with respect to the vertical direction.

The above-described embodiments have been illustrated and described indicating that the powder material and the laser emitted from the DED nozzle 250 intersect at the fabrication point 253, but may be designed in such a manner that the powder material and the laser intersect slightly above the fabrication point 253. For example, in one embodiment, the DED nozzle 250 can be designed in such a manner that the powder material and the laser intersect at a position above the above-described fabrication point 253 by a distance approximately one time to three times as long as the irradiation width of the laser at the above-described fabrication point 253. As one example, in a case where the width of the laser (FWHM, $1/e^2$, or the like) is approximately 2 mm at the fabrication point 253, the DED nozzle 250 can be designed in such a manner that the powder material and the laser intersect at a position above the fabrication point 523 by approximately 2 mm to approximately 6 mm. The intersection of the powder material and the laser at a position slightly above the fabrication point 253 causes heat to be applied to the powder material to melt it at the position slightly above the fabrication point 253, thereby allowing the melted material to be supplied to the fabrication point 253.

The above-described embodiments allow the powder material to be supplied from the DED nozzle 250 to the fabrication point 253 even when the carrier gas and the powder material are supplied from the DED nozzle 250 at such a low flow velocity V that the carrier gas ejected from the DED nozzle 250 is prevented from blowing off the powder bedded in advance in the case where the AM fabrication is carried out with the powder disposed at the fabrication point 253 or near the fabrication point 253 in advance. Preferably, the carrier gas is supplied at a flow velocity equal to or lower than approximately 1 m/s as the flow velocity V low enough to prevent the carrier gas from blowing off the powder bedded in advance. Further, more preferably, the flow velocity of the carrier gas ejected from the DED nozzle 250 is from approximately 0.3 m/s to approximately 0.1 m/s.

In the AM fabrication using the DED nozzle 250, the velocity at which the powder material is ejected may be desired to be changed according to the location where the fabrication is carried out, the material, and/or the like, in some cases. However, changing the ejection velocity V of the powder material may lead to a failure to appropriately supply the powder material to the fabrication point 253 as described above. It is costly to prepare a plurality of DED nozzles equipped with differently directed second passages 254 through which the powder material and the carrier gas pass according to the velocity V at which the powder material is ejected.

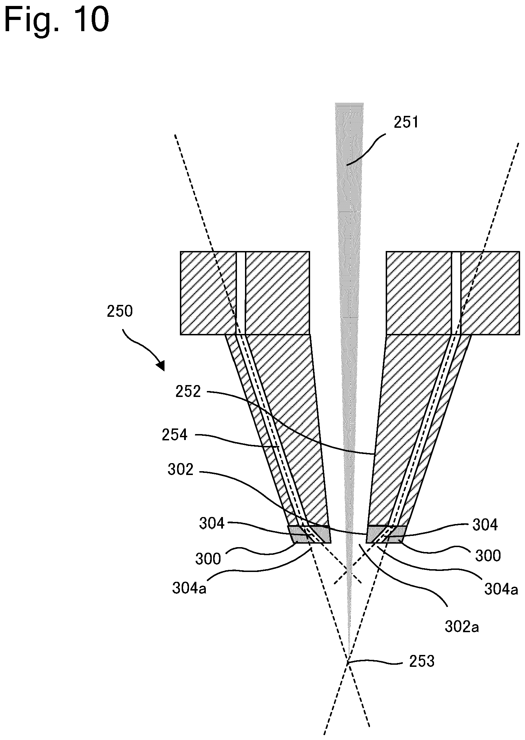

In light thereof, the present disclosure discloses an adapter 300 detachably attachable to the distal end of a DED nozzle in one embodiment. Fig. 10 schematically illustrates a cross-section of the DED nozzle 250 according to one embodiment. The adapter 300 for changing the ejection directions of the powder material and the carrier gas is attached to the distal end of the DED nozzle 250 illustrated in Fig. 10.

The adapter 300 has a generally ring-like shape, and is shaped and structured detachably attachably to the distal end of the DED nozzle 250. The adapter 300 includes an adapter laser passage 302, which is brought into communication with the first passage 252 through which the laser passes in the DED nozzle 250 when the adapter 300 is attached to the DED nozzle 250. Further, the adapter 300 includes an adapter powder passage 304, which is brought into communication with the second passage 254 through which the carrier gas and the powder material pass in the DED nozzle 250 when the adapter 300 is attached to the DED nozzle 250. The laser 251 is emitted from an adapter laser port 302a of the adapter 300 after passing through the first passage 252 of the DED nozzle 250 and the adapter laser passage 302 of the adapter 300. Further, the carrier gas and the powder material are ejected from an adapter powder port 304a of the adapter 300 after passing through the second passage 254 of the DED nozzle 250 and the adapter powder passage 304 of the adapter 300.

The direction of the adapter powder passage 304 of the adapter 300 (the angle θ [deg] with respect to the vertical direction) is determined according to the position of the fabrication point 253 and the velocity V at which the powder material is ejected from the DED nozzle 250 as described above. Therefore, the angle θ at which the powder material is ejected from the DED nozzle 250 can be changed by preparing a plurality of adapters 300 equipped with the adapter powder passages 304 extending in different directions and changing the adapter 300 even for the same DED nozzle 250.

In the case where the DED nozzle 250 includes the third passage through which the shield gas passes, the adapter 300 may include an adapter shield gas passage in communication with the third passage of the DED nozzle 250.

At least the following technical ideas can be recognized from the above-described embodiments.

[Configuration 1] According to a configuration 1, a DED nozzle for use with an AM apparatus is provided. This DED nozzle includes a DED nozzle main body, a laser port provided at a distal end of the DED nozzle main body and configured to emit laser light, a laser passage provided in communication with the laser port and configured to allow the laser light to pass through inside the DED nozzle main body, a powder port provided at the distal end of the DED nozzle main body and configured to eject a powder material, and a powder passage provided in communication with the powder port and configured to allow the powder material to pass through inside the DED nozzle main body. Directions of the powder passage and the powder port are determined based on a distance from the powder port to a fabrication point, a velocity of the powder material ejected from the powder port, and a gravitational acceleration.

[Configuration 2] According to a configuration 2, in the DED nozzle according to the configuration 1, the directions of the powder passage and the powder port are determined while the velocity of the powder material ejected from the powder port is 0.3 m/s or lower.

[Configuration 3] According to a configuration 3, the DED nozzle according to the configuration 1 or 2 is configured in such a manner that powder ejected from the powder port and the laser emitted from the laser port intersect at the fabrication point or intersect at a position higher than the fabrication point.

[Configuration 4] According to a configuration 4, an adapter detachably attachable to a DED nozzle for use with an AM apparatus is provided. This adapter includes an adapter laser passage configured to be brought into communication with a laser passage of the DED nozzle when the adapter is attached to the DED nozzle, an adapter laser port configured to emit a laser that passes through the adapter laser passage, an adapter powder passage configured to be brought into communication with a powder passage of the DED nozzle when the adapter is attached to the DED nozzle, and an adapter powder port configured to eject a powder material that passes through the adapter powder passage. Directions of the adapter powder passage and the adapter powder port are determined based on a distance from the adapter powder port to a fabrication point, a velocity of the powder material ejected from the adapter powder port, and a gravitational acceleration.

[Configuration 5] According to a configuration 5, in the adapter according to the configuration 4, the directions of the adapter powder passage and the adapter powder port are determined while the velocity of the powder material ejected from the adapter powder port is 0.3 m/s or lower.

[Configuration 6] According to a configuration 6, the adapter according to the configuration 4 or 5 is configured in such a manner that powder ejected from the adapter powder port and the laser emitted from the adapter laser port intersect at the fabrication point or intersect at a position higher than the fabrication point.

[Configuration 7] According to a configuration 7, a method for designing a DED nozzle for use with an AM apparatus is provided. This method includes determining a direction of a powder port provided at a distal end of a DED nozzle main body and configured to eject a powder material and a direction of a powder passage provided in communication with the powder port and configured to allow the powder material to pass through inside the DED nozzle main body based on a distance from the powder port to a fabrication point, a velocity of the powder material ejected from the powder port, and a gravitational acceleration.

[Configuration 8] According to a configuration 8, in the method according to the configuration 7, the directions of the powder passage and the powder port are determined while the velocity of the powder material ejected from the powder port is 0.3 m/s or lower.

[Configuration 9] According to a configuration 9, in the method according to the configuration 7 or 8, the directions of the powder passage and the powder port are determined in such a manner that powder ejected from the powder port and a laser emitted from a laser port intersect at the fabrication point or intersect at a position higher than the fabrication point.

[Configuration 10] According to a configuration 10, a method for designing an adapter detachably attachable to a DED nozzle for use with an AM apparatus is provided. This method includes determining a direction of an adapter powder port configured to eject a powder material and a direction of an adapter powder passage in communication with the adapter powder port in a state that the adapter is attached to a distal end of a DED nozzle main body based on a distance from the adapter powder port to a fabrication point, a velocity of the powder material ejected from the adapter powder port, and a gravitational acceleration.

[Configuration 11] According to a configuration 11, in the method according to the configuration 10, the directions of the adapter powder passage and the adapter powder port are determined while the velocity of the powder material ejected from the adapter powder port is 0.3 m/s or lower.

[Configuration 12] According to a configuration 12, in the method according to the configuration 10 or 11, the directions of the adapter powder passage and the adapter powder port are determined in such a manner that powder ejected from the adapter powder port and a laser emitted from an adapter laser port intersect at the fabrication point or intersect at a position higher than the fabrication point.

[Configuration 13] According to a configuration 13, an AM apparatus is provided. This AM apparatus includes the DED nozzle according to any one of the configurations 1 to 3 or the adapter according to any one of the configurations 4 to 6.

REFERENCE SIGNS LIST

| 100 | AM apparatus |
| 250 | DED nozzle |
| 251 | laser |
| 252 | first passage |
| 253 | fabrication point |
| 254 | second passage |
| 259 | nozzle main body |
| 300 | adapter |
| 302 | adapter laser passage |
| 304 | adapter powder passage |
| 252a | laser port |
| 254a | powder port |
| 302a | adapter laser port |
| 304a | adapter powder port |

**Claims**

1. A DED nozzle for use with an AM apparatus, the DED nozzle comprising:

a DED nozzle main body;
a laser port provided at a distal end of the DED nozzle main body, the laser port being configured to emit laser light;
a laser passage in communication with the laser port, the laser passage being configured to allow the laser light to pass through inside the DED nozzle main body;
a powder port provided at the distal end of the DED nozzle main body, the powder port being configured to eject a powder material; and
a powder passage in communication with the powder port, the powder passage being configured to allow the powder material to pass through inside the DED nozzle main body;
wherein directions of the powder passage and the powder port are determined based on
a distance from the powder port to a fabrication point,
a velocity of the powder material ejected from the powder port, and
a gravitational acceleration.

2. The DED nozzle according to claim 1, wherein the directions of the powder passage and the powder port are determined while the velocity of the powder material ejected from the powder port is 0.3 m/s or lower.

3. The DED nozzle according to claim 1 or 2, wherein the DED nozzle is configured in such a manner that powder ejected from the powder port and the laser emitted from the laser port intersect at the fabrication point or intersect at a position higher than the fabrication point.

4. An adapter detachably attachable to a DED nozzle for use with an AM apparatus, the adapter comprising:

an adapter laser passage configured to be brought into communication with a laser passage of the DED nozzle when the adapter is attached to the DED nozzle;
an adapter laser port configured to emit a laser that passes through the adapter laser passage;
an adapter powder passage configured to be brought into communication with a powder passage of the DED nozzle when the adapter is attached to the DED nozzle; and
an adapter powder port configured to eject a powder material that passes through the adapter powder passage,
wherein directions of the adapter powder passage and the adapter powder port are determined based on
a distance from the adapter powder port to a fabrication point,
a velocity of the powder material ejected from the adapter powder port, and
a gravitational acceleration.

5. The adapter according to claim 4, wherein the directions of the adapter powder passage and the adapter powder port are determined while the velocity of the powder material ejected from the adapter powder port is 0.3 m/s or lower.

6. The adapter according to claim 4 or 5, wherein the adapter is configured in such a manner that powder ejected from the adapter powder port and the laser emitted from the adapter laser port intersect at the fabrication point or intersect at a position higher than the fabrication point.

7. A method for designing a DED nozzle for use with an AM apparatus, the method comprising:

determining a direction of a powder port provided at a distal end of a DED nozzle main body and configured to eject a powder material and a direction of a powder passage in communication with the powder port, the powder passage being configured to allow the powder material to pass through inside the DED nozzle main body based on
a distance from the powder port to a fabrication point,
a velocity of the powder material ejected from the powder port, and
a gravitational acceleration.

8. The method according to claim 7, wherein the directions of the powder passage and the powder port are determined while the velocity of the powder material ejected from the powder port is 0.3 m/s or lower.

9. The method according to claim 7 or 8, wherein the directions of the powder passage and the powder port are determined in such a manner that powder ejected from the powder port and a laser emitted from a laser port intersect at the fabrication point or intersect at a position higher than the fabrication point.

10. A method for designing an adapter detachably attachable to a DED nozzle for use with an AM apparatus, the method comprising:

   determining a direction of an adapter powder port configured to eject a powder material and a direction of an adapter powder passage in communication with the adapter powder port in a state that the adapter is attached to a distal end of a DED nozzle main body based on
   a distance from the adapter powder port to a fabrication point,
   a velocity of the powder material ejected from the adapter powder port, and
   a gravitational acceleration.

11. The method according to claim 10, wherein the directions of the adapter powder passage and the adapter powder port are determined while the velocity of the powder material ejected from the adapter powder port is 0.3 m/s or lower.

12. The method according to claim 10 or 11, wherein the directions of the adapter powder passage and the adapter powder port are determined in such a manner that powder ejected from the adapter powder port and a laser emitted from an adapter laser port intersect at the fabrication point or intersect at a position higher than the fabrication point.

13. An AM apparatus comprising:
the DED nozzle according to any one of claims 1 to 3 or the adapter according to any one of claims 4 to 6.

# Fig. 1

# Fig. 2

# Fig. 3

# Fig. 4

## Fig. 5

254a

θ

X [mm]

Y [mm]

FABRICATION POINT 253 (X = 7.25, Y = -20)

——— V=20 θ=20     – – – V=1.0 θ=20

## Fig. 6

254a

θ

X [mm]

Y [mm]

FABRICATION POINT 253 (X = 7.25, Y = -20)

——— V=1.0 θ=22

## Fig. 7

FABRICATION POINT 253 (X = 7.25, Y = -20)

V=0.5 θ=27

## Fig. 8

FABRICATION POINT 253(X = 7.25, Y = -20)

V=0.2 θ=45

# Fig. 9

# Fig. 10

251

250

252

254

302

304

300

304a

304

300

304a

302a

253

| INTERNATIONAL SEARCH REPORT | International application No. |
|---|---|
| | **PCT/JP2021/042411** |

**A. CLASSIFICATION OF SUBJECT MATTER**

*B23K 26/21*(2014.01)i; *B23K 26/34*(2014.01)i; *B33Y 10/00*(2015.01)i; *B33Y 30/00*(2015.01)i
FI:  B23K26/34; B33Y30/00; B33Y10/00; B23K26/21 Z

According to International Patent Classification (IPC) or to both national classification and IPC

**B. FIELDS SEARCHED**

Minimum documentation searched (classification system followed by classification symbols)

B23K26/00-26/70; B33Y10/00; B33Y30/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2011-88154 A (HITACHI, LTD.) 06 May 2011 (2011-05-06) <br> paragraphs [0041]-[0047], fig. 5, 6 | 1-13 |
| A | US 4724299 A (QUANTUM LASER CORP.) 09 February 1988 (1988-02-09) <br> column 2, line 62 to column 6, line 44, fig. 1-4 | 1-13 |
| A | JP 2019-500246 A (ECOLE CENTRALE DE NANTES) 10 January 2019 (2019-01-10) <br> paragraphs [0033]-[0048], fig. 1-5 | 1-13 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 January 2022** | **08 February 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2021/042411**

| Patent document cited in search report | | | Publication date (day/month/year) | Patent family member(s) | | | Publication date (day/month/year) |
|---|---|---|---|---|---|---|---|
| JP | 2011-88154 | A | 06 May 2011 | US 2011/0089151 A1 paragraphs [0065]-[0073], fig. 5, 6 EP 2314411 A2 | | | |
| US | 4724299 | A | 09 February 1988 | (Family: none) | | | |
| JP | 2019-500246 | A | 10 January 2019 | US 2019/0193334 A1 paragraphs [0060]-[0075], fig. 1-5 WO 2017/114965 A1 FR 3046370 A1 KR 10-2018-0099838 A CN 108698061 A | | | |

Form PCT/ISA/210 (patent family annex) (January 2015)

**EP 4 279 210 A1**

**Patent documents cited in the description**

- JP 2021004335 A
- JP 2011088154 A
- US 4724299 A
- WO 93013871 A
- JP 2005219060 A
- JP 2019500246 W